Europäisches Patentamt

European Patent Office

Office européen des brevets

(19)

(11) **EP 1 612 695 A1**

(12) **EUROPEAN PATENT APPLICATION**

(43) Date of publication:
**04.01.2006 Bulletin 2006/01**

(51) Int Cl.:
*G06F 17/27* (2006.01)    *G06F 17/28* (2006.01)

(21) Application number: **04291673.4**

(22) Date of filing: **01.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **ALCATEL**
**75008 Paris (FR)**

(72) Inventors:
• **Bi, Yan**
**70734 Fellbach (DE)**

• **Sienel, Jürgen**
**71229 Leonberg (DE)**
• **Müller, Wolfgang**
**73730 Esslingen (DE)**

(74) Representative: **Rausch, Gabriele et al**
**Alcatel**
**Intellectual Property Department, Stuttgart**
**70430 Stuttgart (DE)**

(54) **Method of language identification and language identifying module using short word lists and n-grams**

(57)    The invention relates to a language identifying module and a method for identifying the language of a text string, in particularly for providing language information to a text-to-speech application, comprises the steps of:

a) obtaining a string to be analysed
b) dividing the string into separated words
c) obtaining one word
d) analysing the word with a short-word-list technique

e) in addition analysing said word with a n-gram technique, if there are no results from the short-word-list technique
f) performing the steps c) to e) for further words of the string
g) determine the languages of the string based on the analysing results of both the short-word-list technique and n-gram technique.

Figure 1

**Description**

Field of the invention:

The invention relates to a linguistic text analysis method, and more specifically, to a method for identifying a language of a text and to an application using that method, i.e. a language identifying module or tool.

Background of the invention:

In general, text documents could be written in or contain more then one language. Multi-language text documents, for example, are often to find in (electronic) communication in multi-national-companies. Another example are instructions for use, which are often formulated in different languages. And, of course the internet is a place where mixed language documents could be found.

Considering the wide use of e-mail it is not uncommon to find e-mail messages have been written in different languages. For example, a quoted text could be in English, with the main text in Dutch. In particular, as it is becoming the most extensively used language in Internet, English is often utilized as a standard language in the e-mail communication, mixed with other languages.

The identification of the language(s) of a text or of parts of a text having different languages is in particular useful for Text-to Speech (TTS) applications or systems. There is no truly multilingual TTS system, which means a system that uses common algorithms for multiple languages. For a mixed language document, such as an e-mail message, process before the language-specific analysis is required to identify the language of each plain text block. This mixed text brings a new task in the text pre-process in the TTS system, and before going to the language-specific phases such as phonetic and prosodic analysis, it is required to distinguish a mixed input text and then annotate each part with its language. Every annotated part should preferably contain only one language. Only after the language identification process can apply the phonetic rules to translate into phonetic representation of a TTS system further.

To identify the language of a text, one known method is dictionary access: keep a lexicon for each possible language, and then look up every word in the sample text to see in which lexicon it falls. However, at first creating or obtaining a representative lexicon is not easy, furthermore, if the language is highly inflected, then either the lexicon must become several times larger to get the necessary word inclusion or one must develop some language specific morphological process to reduce different forms to their stems, finally this technique is not text tolerance, if there are some spelling errors in the text.

Another known approach uses a method that calculate and compare profiles of N-gram frequencies. First, a system computes profiles on training set data that represent the various languages, and then computes a profile for a particular document that is to be classified. Finally, the system computes a distance measure between the document's profile and each of the language profiles. The system selects the language whose profile has the smallest distance to document's profile. In a further n-gram method it is described that at first the probability of the appearance of all possible n-gram in each language is computed, and then the probability of the n-grams is used to distinguish a unknown text.

Summary of the Invention

It is therefor an object of the present invention to provide a method and a device for identifying a language of a text string, which improves the known techniques.

This objects are achieved by a method according to claim 1 and a language identifying module according to claim 8.

A method for identifying the language of a text string, in particularly for providing language information to a text-to-speech application, comprises the steps of:

     a) obtaining a string to be analysed
     b) dividing the string into separated words
     c) obtaining one word
     d) analysing the word with a short-word-list technique
     e) in addition analysing said word with a n-gram technique, if there are no results from the short-word-list technique
     f) performing the steps c) to e) for further words of the string
     g) determine the languages of the string based on the analysing results of both the short-word-list technique and n-gram technique.

A language identifying module according to the invention comprises means for executing the steps of:

a) obtaining a string to be analysed
b) dividing the string into separated words
c) obtaining one word
d) analysing the word with a short-word-list technique
e) in addition analysing said word with a n-gram technique, if there are no results from the short-word-list technique
f) performing the steps c) to e) for further words of the string
g) determine the languages of the string based on the analysing results of both the short-word-list technique and n-gram technique.

Preferable but not necessarily, the step f) is performed until all words of the text string are analyzed.

In a preferred embodiment, the language identifying module is a software which running on a processor, e.g. a digital signal processor (DSP), executes the steps of the method according to the invention.

In a further preferred embodiment the language identifying module is a hardware module comprising at least a memory, a processor and an input/output interface, wherein a software is stored in the memory and the software running on the processor will execute the method according to the invention. Furthermore, a hardware module could for example realized as an ASIC.

A basic idea of the invention is the short-word-list technique and its combination with an n-gram technique. The short-word technique works much more quickly then the n-gram technique. Taking a look at a sequence unit probability corpora for a different languages, it becomes clear, that the n-gram corpora is much bigger then a short-word-list corpora. It needs more time to search for the n-gram in a corpus in comparison to the short-word-list technique, where no time is required for multiple calculation. It can get simple the word occurrence probability for each language after having been found the word in the short-word-list corpora.

In a preferred development of the invention certain short-word-list are used for certain kind documents to be analyzed, wherein the short-word-list are generated based on such kind of documents as the documents to be analyzed. The occurrence of (specific) words, also of short words, is different for certain kind of documents. For example the words "hallo", "Mit freundlichen Grüßen", "Grüßen" and "Gruß" are often found in e-mails, but usually not used in report or newspaper articles.

According to a preferred embodiment of the invention, the identifying of the language is further performed by searching for special language characteristic. A special characteristic for German is for example the German Umlaut and for French for example cedilla and accent.

In a further preferred embodiment of the invention, the used n-gram technique is a bi-gram or tri-gram technique and the used short-word-list technique is based on word-list of one to six letter words and their probability. Such a combination of a tri-gram or bi-gram technique with the short-word technique provides both fast and reasonable results and adequate memory and computing speed requirements.

According to a further development of the invention a weighting step is performed, weighting the results by means of a geometric mean and adding the geometric means according to the greatness of the results of each language.

In this embodiment a mapping of the probabilities to an integer value is not provided, but the probabilities are compared directly. However, if the probabilities are used, the occurrence probabilities of longer word, which has more bi-grams or tri-grams could be reduced because of the multiple operation and thus will influence the final result. The afore mentioned weighting step reduces the great influence of the word length on the final result, but it still obtains the relative greatness of the word occurrence probability for each language.

Further advantages and developments of the invention are apparent from the description and the accompanying drawings.

It is to be understood that the afore mentioned features and the features explained below can be used not only in the respective combinations described but also in other combinations or alone.

Brief description of the drawings:

Preferred embodiments of the present invention will now be described with reference to the accompanying drawings in which

Fig. 1     shows a general a flow-chart of a method according to the invention, and

Fig. 2     shows in more detail steps of the n-gram technique.

The method according to the invention is based on a statistical method to identify the language of text. This means that it gives out only a relatively best answer. The input text can be a single word or a block of text for example of a text document. There is no limitation to a certain kind of text document, i.e. the method is applicable to any kind of text files like reports, letters, e-mails, web-sites, etc. Before using the language identification method, text parts of the text file have to distinguish from non-text parts, e.g. format information of the text file.

Following the invention will be described in greater detail wherein as an example the method is applied to e-mail messages as text files.

First, some remarks about a language identification process, in particular for an e-mail message as input text. (Here it is meant not the whole of the e-mail message but the part that should be read by a TTS system, e.g. plain text and other readable parts.)

Text tolerance

E-mail messages are written by a person, and human being can always create an error, so it is not unavoidable that e-mail messages contains different kinds of text errors, such as spelling and grammatical errors, or sometimes there are a few foreign language words being used, as far as having not much influence to be understood. A creative writer sometimes uses words that will be never found in a dictionary, but everybody understands them. Such words are usually created in morphologic form to express the writer's emotion, for example: beeeep or toooo much. The language identification tools should be tolerant enough to allow such almost harmless errors. Often used special symbols, like URL addresses, e-mail addresses should also have no effect on the identification.

Text Length

The length of an e-mail message text has not much restriction. It can be as long as being accepted by MUA (Mail User Agent) or as short as the writer could express his meaning, therefore the length of the text to be detected should have not much influence to the correction of language identification, that is, it should function well whether the text is short or long.

Speed

As thought that the language identification processing is only a relative small phase in the whole TTS system, it should not become a loading of the total speed of TTS system.

Small Memory Space

The reason like the one above, not only the speed but also the capability of the offline corpora, with which the language identification process is used, should not be a burden in a TTS system. The memory spaces being used in the processing should also be as small as possible, since a big occupancy of memory may have a significant influence to the total processing speech.

Unique result

After the text analysis phase the input text goes to linguistic and phonetic analysis for certain languages, so that the language identification process must give out a result at the end. It cannot be several results, although it could be more than one candidate. An answer like "unknown language" may be given. That mostly happens, when the detected text is not long enough to collect sufficient language features.

The object of the language identification method is the text of alphabet language, especially Latin alphabets. Ideographic languages such as Chinese or Japanese will not be considered here. It is because alphabetically written languages are highly non-random and consistent in the letters and letter sequences that they use, that the automatic language identification is possible; and equally important, different languages differ consistently in the letters and letters sequences used. In other words, each language uses a unique or very characteristic alphabet, and letters in the significant text; in addition, the frequencies of the occurrence of sequences of two, three, four, five and more letters are characteristically stable within, and diverse among, natural languages. Such sequence of letters will here be defined as a "sequence unit", which describes a letter sequence in a word that can possibly represent the feature of the language. A sequence unit can be one letter, two letters, or even a whole word. The one letter, two letter, or three letter sequences are often called N-gram. Using uni-gram (one letter) to identify a language is the same as to look though certain alphabet occurrences in a language. If the sequence unit is a whole word, then it is very similar to the method of dictionary access requiring a big size dictionary or corpora.

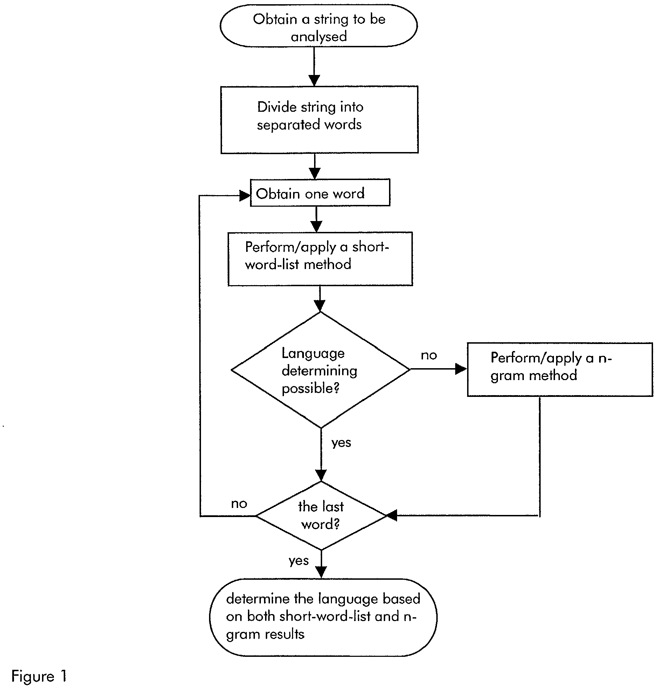

Fig. 1 shows a flow-chart of a method according to the invention. In a first step, a string to be analyzed or identified is obtained. In a second step the string is divided into separated words. When considering an input of an unknown string consisting of words, the word is the basic unit to be identified in the language. How to tokenize words computationally? How to define a word? One definition is "The smallest items which are spoken by themselves", or "forms that occur as sentences". Such definitions are abstract and higher linguistic analysis could be used, if such a separating of words is desired.

Here a much more simple solution is proposed. A word is defined again, so that it can be realized by the program, e.g. a word is a string between two blank symbols. But this statement is not always true, for instance is *"don't"* two words or only one? The symbol "'" is obviously not a letter and should not be considered as a part of a word. A word will be defined as a sequence of alphabets, which is divided by any non-alphabet character. That means that in "it's" there are two "words", one is "it" and the other is "s", although "s" alone has no meaning at all and would never be found in any dictionary. This definition also matches with the wordlists used to derive the offline corpora.

In the next step the first word of the string is obtained and the short-word-list technique is applied to the word in order to identify its language. If there is no language identification possible, in addition an n-gram method, preferable a bi- gram or tri-gram technique, is applied to that word. Then the next word of the string is analyzed at the same way. After analyzing all words of the string the language of the string is determined based on the short-word-list technique results and n-gram technique results.

Following, the short-word-list technique is described in more detail. The short-word-list technique compares a sequence unit, which is a whole word, with a list of short words, preferable a list with words up to six letters, and their probabilities of occurrence in different languages. By limitation the word list to short words, the list is considerable reduced while it still contains very typical words of the different languages. The short-word-list technique alone will not always give reasonable results for language identification, in particularly for a text with only a few words. In combination with an n-gram method, however, the performance for language identification is remarkable increased.

The short-word-list technique as well as the n-gram technique are based on a statistical network, wherein the word occurrence probability of different languages or the occurrence probability of sequence units is evaluated for different languages. Using the occurrence probabilities of sequence units in a word of different language, which have been derived from language corpora sources, the word occurrence probability can be derived. In general, big language corpora sources are available. However, instead of such big language sources for example word-list with the most frequent word for different languages could be used.

It should to be noted, that small amounts of training data are more likely to misrepresent the true distribution of N-gram or word frequencies from a particular language source due to a lack of sufficient samples.

In a simple embodiment of the invention, the first 10,000 most frequent wordlists for different languages, e.g. in four languages, namely English, German, Dutch and French, are used instead of big language corpora sources. The used wordlists have been derived from

BNC (British National Corpus): total words 117,599,144;
STZ (Stuttgarter Zeitung): total words 36,197,373;
Volkskrant: total words 63,209,487;
Le Monde: total words 4,983,689.

The BNC is a corpus of modern English, both spoken and written. The written part (90%) includes newspapers, specialist periodicals, journals and academic books, popular fiction, school and university essays etc. The spoken part (10%) includes a large amount of unscripted informal conversation in all kinds of different contexts. However, STZ, Volkskrant and Le Monde corpora have been extracted only from newspapers.

The training corpora are formatted, the first column is the frequency of the word's appearance in the total corpus source, and the second column is the word.

| | |
|---|---|
| 979251 | is |
| 917089 | was |
| 897681 | I |
| 846196 | it |
| 811018 | for |
| 687486 | on |
| 661555 | be |
| 632229 | with |
| 631814 | The |
| 596640 | you |
| 488843 | he |

*slice of the first 10,0000 most frequent wordlist in English*

The language identification will be exemplarily described for the aforementioned four languages

Computing the probability of short word

Common words such as determiners, conjunctions and prepositions are good clues for guessing a language. These words are often short, relatively stable and at the same time carry enough character for each language. Short words are enough to create a small dictionary for the languages. Short words are preferable defined as all the words that contain less than or equal 6 letters. This leads to a good balance between greatness of the word list and reasonable results for language identification.

$$(1) \quad \text{Prob(lang}=x|sw_i) = \frac{\text{Freq}(sw_j)}{\sum\limits_{i=1}^{n} \text{Freq}(sw_i)}$$

With (1) 2439 short words in English have been found, 1398 in German, 1710 in French and 1864 in Dutch. The following figure shows the most frequent short words of English, German, French and Dutch.

| it | 0.01742123 | die | 0.05285656 |
|---|---|---|---|
| is | 0.01595151 | und | 0.03213280 |
| was | 0.01475970 | in | 0.02783993 |
| i | 0.01447768 | den | 0.01801619 |
| for | 0.01362127 | von | 0.01511701 |
| on | 0.01158035 | das | 0.01471225 |
| you | 0.01112299 | zu | 0.01319298 |
| he | 0.01087655 | mit | 0.01297108 |
| be | 0.01062201 | im | 0.01261766 |
| the | 0.91042497 | für | 0.01155943 |
| with | 0.01040483 | auf | 0.01131154 |
| as | 0.00826574 | des | 0.01094791 |
| by | 0.00818936 | sich | 0.01074315 |
| at | 0.00762503 | nicht | 0.01006202 |
| have | 0.00756884 | dem | 0.00988496 |
| are | 0.00752405 | ein | 0.00952791 |

| de | 0.07039200 | dat | 0.02134376 |
|---|---|---|---|
| la | 0.03875779 | is | 0.02090665 |
| le | 0.02961229 | op | 0.01805457 |
| à | 0.02624361 | zijn | 0.01700586 |
| les | 0.02558392 | te | 0.01696462 |
| et | 0.02449514 | met | 0.01578663 |
| des | 0.02206259 | die | 0.01504609 |
| en | 0.01849663 | de | 0.01493435 |
| du | 0.01622803 | voor | 0.01428758 |
| un | 0.01540468 | niet | 0.01322678 |
| une | 0.01313490 | maar | 0.01012428 |
| a | 0.01252401 | als | 0.00972405 |
| est | 0.01224519 | hij | 0.00954118 |
| que | 0.01120254 | aan | 0.00941371 |
| qui | 0.01079875 | er | 0.00827822 |
| dans | 0.01016584 | ik | 0.00813158 |

*slice of the most frequent short words of English, German, French and Dutch*

When using the short word technique, the process does not require that the word is divided into n-grams and there are no differences among less possible and most possible. If this word is not contained in the short word list or corpus of a certain language, the possibility is zero, or it is in the list, then it gets the value 100, so that it has less complicated processes using short word technique. It runs more quickly than using the n-gram technology.

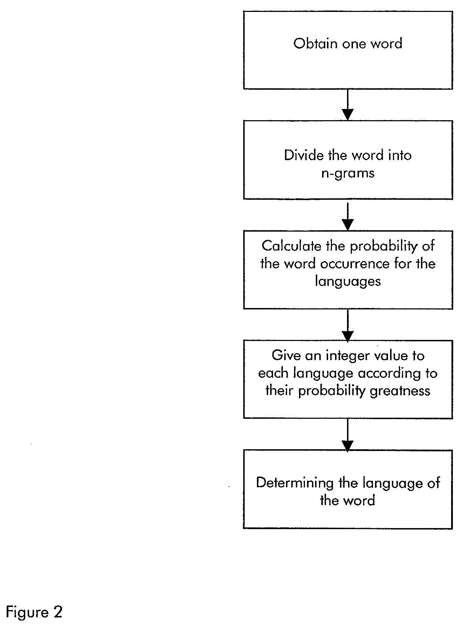

Referring to figure 2 the n-gram technique is described in more detail. In a first step the word is divided into n-grams. Preferable, the a bi- or tri-gram technique is used, thus the word is divided in bi- or tri-grams. In the next step the possibility of the word occurrence for the different languages is calculated.

Following the n-gram technique is introduced.

An N-gram is an N-character slice of a longer string. For example a word text would be composed of the following N-grams:

uni-gram:   t, e, x, t

bi-grams:   -t, te, ex, xt, t-

tri-grams:   -te, tex, ext, xt-

.....

The minus character is used to represent space. In general, a string of length $k$, padded with one space before and after it, will have $k$ uni-grams (it does not need to add spaces, because uni-gram cannot give the much sequence information at all.), $k + l$ bi-grams and $k$ tri-grams. The string from which an n-gram is taken must not just be a single word; it may also be a block of text together with spaces between two words, so that an N-gram can also reflect the context information about word connections in a language, besides the sequence (combination) character of it. These sequences, however, are not completely random. In general, they form sentences and have the statistical structure of the language. For instance, in English, the letter e occurs more frequently than $q$, the sequence $th$ more frequently than $xp$, sch does not occur in French, etc.

The N-gram technique is an application of the conditional probability theory. A probability is the likelihood of an event to occur. Conditional probability represents how the variables relate to each other, in formula:

$$\text{Prob(A|B)} = \frac{\Pr ob(A \& B)}{\Pr ob(B)}$$

Where:

a) Prob(A|B) is the probability of event A given B;

b) Prob(A&B) is the probability of A and B occurring simultaneously.

If we consider A as a language, English, and B as one n-gram, here for instance, a bi-gram $th$, the question is how to get the $th$ occurrence probability in English. We meet two problems in calculating these probabilities:

1) Since there is no record of all text ever written, the true probabilities cannot be determined.

2) There must be a corpus of sample data to estimate probabilities. This corpus should be large enough to get a reasonable result.

For example, for bi-gram, the probability of a $th$ in English and German:

$$\text{Prob(lang=}en|th\text{)} = \frac{\Pr ob(lang = en \& th)}{\Pr ob(th)}$$

$$\text{Prob(lang=}de|th\text{)} = \frac{\Pr ob(lang = de \& th)}{\Pr ob(th)}$$

We see that these two formulae have a common denominator; therefore to compare the occurrence probabilities of *th* in two languages the problem can be reduced to maximizing:

$$\text{Prob(lang}=x|th) \approx \text{Prob(lang}=x\&th)$$
$$= \text{Count}(th \text{ in } x)/\text{Count(all bi-grams in } x)$$

in general

$$(2) \quad \text{Prob(lang}=x|g_i) \approx \text{Prob(lang}=x\& g_i)$$
$$= \text{Count}(g_i \text{ in } x)/\text{Count(all bi-grams in } x)$$

Where 1) $g_i$ is a n-gram;
2) $x$ is a language.

Using N-gram technique all sequence units occurrence probability can be derived in a language, not only suitable for N-gram but also for short words. This is the basic technique for the language identification. With the formula (2) offline corpora can be created, which contain all the sequence units that appear in one language and their occurrence probabilities. These corpora will be derived from language corpora sources.

Language Identification of a unknown text

Because the language corpora sources to be used are only wordlists, which have no context information, the algorithms will not consider the letter sequence between words, rather just the letter sequence within a word. At first an algorithm is described that computes the word occurrence probabilities of a language. Since an unknown text means that it is a string that normally consists of more than one word, a method to identify the language of a block text will also be discussed.

Computing probabilities of word occurrence in certain languages

At first the N-gram technique will be used. Given a word *w* of length *k*, padding with a space before and after. As discussed before, this word has *k+1* bi-gram and *k* tri-gram, the question is what is the probability of the sequence *g1,g2,..g(k+1)* to build the word *w* in a certain language *x*, in formal

$$\text{Prob}(x)(g_1,g_2,...g_k) \text{ where } g_i \text{ is bi-gram and}$$

$$\text{Prob}(x)(g_1,g_2,...g_{k+1}) \text{ where } g_i \text{ is tri-gram}$$

The expression is broken into its two parts. Rather than estimate the occurrence of all N-grams, a limited number of previous N-grams can be used. In general, these are called N-gram models, something different to the meaning of an n-gram that was used before. Here N-gram means the bi-or tri-gram (as defined above) sequence, where N is the number of N-grams used in the pattern. Bi-gram will be used here for simplicity. These look at pairs of N-grams and use the conditional probability that N-gram *i* will follow an n-gram *i+1*.
Maximized:

$$(3)\ \text{Prob}(x)(g_1,g_2,\ldots g_k) \approx \text{Prob}(x)(g_1 \mid g_2)^* \text{Prob}(x)(g_2 \mid g_3)\ldots \text{Prob}(x)(g_i \mid g_{i+1})$$

$$*\text{Prob}(x)(g_{k-1} \mid g_k)$$

$$= \frac{\text{Pr}ob(x)(g_1 \& g_2)}{\text{Pr}ob(x)(g_2)} * \frac{\text{Pr}ob(x)(g_2 \& g_3)}{\text{Pr}ob(x)(g_3)} *$$

$$\ldots * \frac{\text{Pr}ob(x)(g_i \& g_{i+1})}{\text{Pr}ob(x)(g_{i+1})} \ldots * \frac{\text{Pr}ob(x)(g_{k-1} \& g_k)}{\text{Pr}ob(x)(g_k)}$$

$$= \prod_{i=1}^{k} \text{Pr}ob(x)(g_i)$$

This is exactly what is wanted: that the N-gram probability gives the word occurrence probability in a certain language *x*.

For example, the word *"dorf"* occurrence Probability, use bi-gram
in German

$$\text{Prob}(de)(-d,do,or,rf,f-) \approx \text{Prob}(de)(-d)^* \text{Prob}(de)(do)\ ^* \text{Prob}(de)(or)^*$$

$$\text{Prob}(de)(rf)^*\ \text{Prob}(de)(f-)$$

$$= 1{,}11^* 10^{-11}$$

and in Dutch

$$\text{Prob}(nl)(-d,do,or,rf,f-) \approx \text{Prob}(nl)(-d)^* \text{Prob}(nl)(do)\ ^* \text{Prob}(nl)(or)^*$$

$$\text{Prob}(nl)(rf)^*\ \text{Prob}(nl)(f-)$$

$$= 2.8^* 10^{-14}$$

Although the word *"dorf"* occurrence probability in German is small, comparing it with the probability value in Dutch, the word "*dorf*" could be considered as German.

Language identification for a string of more than one word

Until now, there is only the method to calculate the word occurrence probability in one language, but the ultimate purpose is to identify the language of a couple of words, so an algorithm is still needed for the string occurrence probability in one language. The word occurrence probability of a language will be used to get an ideal result by identifying language of a text string.

A simple algorithm will be given at first, and an improved solution is described later.

Given an unknown text, the occurrence probability of each word in it for every language will be computed individually, and then the language of each word is decided according to the probability of different languages. The language of this text is identified according to which language has won most times from the guessing of every word. In formal:

$$\text{lang}(S) = x_j, \quad \text{when} \quad \text{Max}(\sum_{i=1}^{k} f(x_1, w_i), \dots \sum_{i=1}^{k} f(x_n, w_i)) = \sum_{i=1}^{k} f(x_j, w_i)$$

Where

a) $S$ is an unknown text;
b) $x_j$ is a certain language;
c) $w_i$ is a word in s;
d)

$$f(x_j, w_i) = \begin{cases} 1, & \text{when} \quad Max(\text{Prob}(x_1)(w_i), .. \text{Prob}(x_n)(w_i)) = \text{Prob}(x_j)(w_i) \\ 0, & \text{otherwise} \end{cases}$$

For example: given a text string:
*vergriff sich im Ton.*

Tri-gram is used:

$$\text{Prob}(X)(vergriff) = \text{Prob}(\text{-}ve) * \text{Prob}(ver) * \text{Prob}(erg) * \text{Prob}(rgr) * \text{Prob}(gri) * \text{Prob}(rif) * \text{Prob}(iff) * \text{Prob}(ff\_)$$

$$\text{Prob}(en)(vergriff) = (4.9*10^{-3}) * (2.6*10^{-3}) * (0.8*10^{-4}) * (0.6*10^{-5}) * (0.3*10^{-4}) * (1.2*10^{-6}) *$$

$$(3.6*10^{-4}) * (3.5*10^{-4})$$

$$= 5.98*10^{-34}$$

$$\text{Prob}(de)(vergriff) = 6.14*10^{-31}$$

$$\text{Prob}(fr)(vergriff) = 3.27*10^{-34}$$

$$\text{Prob}(nl)(vergriff) = 2.95*10^{-33}$$

*Winner: German*

$$\text{Prob}(X)(sich) = \text{Prob}(\text{-}si) * \text{Prob}(sic) * \text{Prob}(ich) * \text{Prob}(ch\text{-})$$

$$\text{Prob}(en)(sich) = 7.21*10^{-13}$$

$$\text{Prob}(de)(sich) = 9.48*10^{-10}$$

$$\text{Prob}(fr)(sich) = 7.5*10^{-17}$$

$$\text{Prob}(nl)(sich) = 2.7*10^{-14}$$

*Winner: German*

$$\text{Prob}(X)(im)=\text{Prob}(-i)*\text{Prob}(im)*\text{Prob}(m-)$$

$$\text{Prob}(en)(im)=3.3*10^{-7}$$

$$\text{Prob}(de)(im)=6.7*10^{-6}$$

$$\text{Prob}(fr)(im)=6.3*10^{-9}$$

$$\text{Prob}(nl)(im)=9.7*10^{-9}$$

*Winner: German*

$$\text{Prob}(X)(ton)=\text{Prob}(-t)*\text{Prob}(to)*\text{Prob}(on)*\text{Prob}(n-)$$

$$\text{Prob}(en)(ton)=9.57*10^{-10}$$

$$\text{Prob}(de)(ton)=1.15*10^{-11}$$

$$\text{Prob}(fr)(ton)=1.53*10^{-9}$$

$$\text{Prob}(nl)(ton)=4.55*10^{-10}$$

*Winner: French*

Finally there are 3 words in this string text that are German, only one is French, so we get the result that *"vergriff sich im Ton"* is a German sentence.

Obviously, the main advantage of this method is reducing as much as possible the influence of noisy text input. If there are few foreign words or some spelling mistakes, they will not disturb the final result, as long as most of the words in this text are written correctly. Whereas, it can also remedy the limitation while identifying the language of the word occurrence probability, for two very similar languages it is difficult to be identified just according to a word.

The quality of results using the n-gram method depends among others from the language corpora source, and of course an extensive language corpora source leads to better results. However, the use of smaller language corpora sources generated from word-lists and the occurrence frequency derived from them, provides reasonable results. Following the use/generation of word list for the n-gram technique is described.

Computing the probability of N-grams

Since for the purposes of this thesis there was no access to the whole language corpora source, wordlists and their occurrence frequency derived from them have been used to try to get a reasonable result. Depending on the training corpora the formula (2) must be modified. Here are the following emphasises:

Only the n-grams that exist in the first 10,000 words can be gotten. It might not be all of them, but we assume it is. The frequency of each word is valid for every N-gram, which has been taken out from this word.

So it is considered the language corpora source contains only the 10,000 words in the wordlist and each word exist so many times as they are in the original corpus.

$$(4)\ \mathrm{Prob}(\mathrm{lang}=x|g_i) \approx \mathrm{Prob}(\mathrm{lang}=x\&\,g_i)$$

$$\approx \frac{\mathrm{Freq}(\mathrm{lang}=x\,|\,g_i)}{\sum_{x,i=1}^{n} g_i}$$

where:

$$\mathrm{Freq}(\mathrm{lang}=x|g_i) \approx \sum_{j=1}^{m} Freq(lang=x\,|\,w_j)\,{*}\,Freq(g_i\,in\,w_j)$$

With formula (4) 645 bi-grams and 4986 tri-grams in English are derived, 734 bi-grams and 6021 tri-grams in German, 664 bi-grams and 4512 tri-grams in French, 709 bi-grams and 5505 tri-grams in Dutch.

| | | | |
|---|---|---|---|
| -th | 0.01204626 | e- | 0.03276926 |
| the | 0.00927124 | s- | 0.02382904 |
| ed- | 0.00852173 | t- | 0.02074914 |
| er- | 0.00785739 | -w | 0.01593801 |
| re- | 0.00696554 | d- | 0.01581427 |
| ng- | 0.00668849 | th | 0.01515832 |
| is- | 0.00667711 | er | 0.01498056 |
| ing | 0.00659451 | -t | 0.01492240 |
| on- | 0.00638406 | n- | 0.01472655 |
| as- | 0.00604090 | -a | 0.01461698 |
| he- | 0.00584962 | he | 0.01434967 |
| -be | 0.00572901 | -s | 0.01410609 |
| -co | 0.00497056 | re | 0.01379140 |
| her | 0.00492327 | r- | 0.01360531 |
| -ha | 0.00491171 | -i | 0.01329077 |
| -wh | 0.00482546 | y- | 0.01294652 |

*slice of the most frequent tri-grams and bi-grams in English derived from BNC*

| | | | |
|---|---|---|---|
| en- | 0.03058833 | n- | 0.04138222 |
| er- | 0.01410942 | en | 0.03199622 |
| ie- | 0.01327585 | -d | 0.02674460 |
| -di | 0.01240907 | e- | 0.02566917 |
| die | 0.01231810 | er | 0.02495444 |
| ein | 0.01098378 | ch | 0.02087345 |
| -de | 0.01062702 | t- | 0.01918890 |
| ch- | 0.00998122 | r- | 0.01913655 |
| nd- | 0.00904893 | ei | 0.01870821 |

Table continued

| | | | |
|---|---|---|---|
| ich | 0.00899292 | in | 0.01814747 |
| in- | 0.00895976 | de | 0.01769450 |
| den | 0.00801277 | ie | 0.01694882 |
| -un | 0.00787745 | -s | 0.01492040 |
| -ei | 0.00783512 | -a | 0.01370229 |
| und | 0.00765198 | s- | 0.01285316 |
| -au | 0.00666749 | te | 0.01283301 |

*slice of the mostfrequent tri-grams and bi-grams in German derived from STZ*

| | | | |
|---|---|---|---|
| -de | 0.02271352 | e- | 0.05328679 |
| es- | 0.02040374 | s- | 0.03605159 |
| de- | 0.01659374 | -d | 0.02844267 |
| -le | 0.01328746 | t- | 0.02156567 |
| le- | 0.01050586 | es | 0.02121112 |
| nt- | 0.00968692 | de | 0.02058151 |
| -la | 0.00900172 | -1 | 0.02022986 |
| la- | 0.00870444 | le | 0.01694459 |
| ent | 0.00852813 | -p | 0.01672117 |
| re- | 0.00835791 | en | 0.01555193 |
| on- | 0.00742796 | on | 0.01505707 |
| les | 0.00695725 | n- | 0.01465528 |
| ion | 0.00668401 | -e | 0.01451206 |
| -un | 0.00660941 | -a | 0.01421430 |
| -pa | 0.00630493 | re | 0.01315763 |
| que | 0.00630349 | nt | 0.01288633 |

*slice of the most frequent tri-grams and bi-grams in French derived from Le Monde*

| | | | |
|---|---|---|---|
| en- | 0.02885931 | n- | 0.03509568 |
| er- | 0.01076787 | en | 0.03142841 |
| et- | 0.00944801 | t- | 0.02799311 |
| aar | 0.00829498 | e- | 0.02673362 |
| -da | 0.00723977 | er | 0.02269517 |
| at- | 0.00694916 | r- | 0.01878858 |
| oor | 0.00672062 | -d | 0.01729224 |
| ar- | 0.00638200 | de | 0.01586738 |
| -ge | 0.00627131 | aa | 0.01464001 |
| te- | 0.00615487 | s- | 0.01407610 |
| de- | 0.00600261 | te | 0.01406073 |
| -me | 0.00598146 | ij | 0.01298667 |
| an- | 0.00597486 | an | 0.01240320 |
| -zi | 0.00578193 | -m | 0.01214135 |
| -vo | 0.00573835 | ie | 0.01210425 |
| -he | 0.00563447 | qe | 0.01201712 |

*slice of the most frequent tri-grams and bi-grams in Dutch derived from Volkskrank*

Turning back to fig. 2, in step 3 an integer value to each language according to the probability greatness is determined. The process to get the language with greatest probability is actually one that maps a double float value to an integer one. If one language is the winner when comparing a word occurrence probability among the languages, it gets an absolute greater value like 100, and all other languages get 10, if the probability is not zero. If the probability is zero, it means that it is impossible for this word to occur in the language, because there is at least one N-gram or short word in this word that do not exist in our corpora. There are some differences between being less impossible and being not possible at all, which can offset the lack of the size of the corpora, so this simple way to record the inter results in more details can be used.

The above described mapping method will improve by making more fine differences by mapping. Furthermore, the language corpora are improved by using typical language features, e.g. German umlaut.

Until now there have only been three distinctions by mapping from double float value to integer value. If one language is the winner with a word occurrence probability then it gives a value of 100, and if the probability is zero, it gives zero, otherwise 10. Finer differences could be made, for example make a rank for the languages according to the word occurrence probability values, give each rank a distinctive value, like in rank 1, the greatest value, 100, second greatest value 30, third one 20, fourth 10 and so on. If the probability value is zero, then give it zero. Again use the test corpus as before, and the results with the improvements in German corpus using typical German language features for identifying like German Umlaut, are achieved.

|  | 1-2 words | 3-5 words | 6-10 words | 11-15 words | 16-20 words | Above 20 words | Total |
|---|---|---|---|---|---|---|---|
| bi-gram technique | 61.54% | 90% | 95% | 100% | 95% | 100% | 93,81% |
| tri-gram technique | 61,54% | 90% | 100% | 100% | 100% | 100% | 95,58% |
| Short word technique | 38,46% | 90% | 100% | 100% | 100% | 100% | 92,04% |
| Short word+ trigram technique | 69,23% | 90% | 100% | 100% | 100% | 100% | 96,46% |
| Short word+ bi-gram technique | 69,23% | 95% | 100% | 100% | 100% | 100% | 97,35% |

The total accuracies are 3 to 6 percent better as before. The results using the bi-gram technique have been improved mostly, 25% in the group 3-5 words. When the debugging record of before is considered, the bi-gram technique is found to bring more situations, where more than one language has won at the same time with short strings. The updated technique has improved the results in the group "3-5 words" but not in the group "1-2 words". It could not solve the problem totally, and has less influence on the short word technique, but the combination techniques between short word and bi-, tri-grams have given promising results in total.

In a further development of the invention the occurrence probabilities are directly compared instead of the above described mapping method.

As the updated techniques cannot totally solve the problem encountered in the first trial, another way must be found. The problem was that an integer value was used to record each word occurrence probability of the languages, not exactly the probability value. How might the results be when the probabilities with double float values are used, so that the same evaluation value for more than one language can not be achieved at the end? However, if the probabilities are used, which are given from the formula (1), in which exists multiple operations, and because every single probability of bi- or tri-gram or short word in the corpora is smaller than 1, the occurrence probability of a longer word (they have more single bi-or tri-grams) may be much reduced through the multiple operation and it will give less influence to the final result. That is of course not what is wanted. A method to reduce the great influence of the word length on the final result is needed, but it must still obtain the relative greatness of each word occurrence probability for each language.

There is a statistical method called geometric mean that can be used. Geometric mean is an average, which is useful for sets of numbers that are interpreted according to their product and not their sum. It is useful to determine "average factors", in formula

$$\bar{x} = \sqrt[n]{\prod_{i=1}^{n} x_i}$$

We will change a little bit in this formula, $x_i$ is defined as the probability of each bi-gram (or tri-gram) in a word, for the short word technique there is no product processing, and $n$ as the number of words in the input unknown string, so that the geometric mean of the word occurrence of each language is given, then add up the geometric means, according the greatness of the results of each language to identify the language of the input string, in formula:

$$(5)\ \text{lang(S)}= x_j,\ \text{when Max}(\sum_{i=1}^{n}(x_1)\bar{w}_i,\dots \sum_{i=1}^{n}(x_m)\bar{w}_i)=\sum_{i=1}^{n}(x_j)\bar{w}_i$$

Where: 1)   $\bar{w}_i = \sqrt[n]{\prod_{i=1}^{k} g_i}$ , $g_i$ is the N-gram occurrence probability in a language; $k$ is the number of N-gram in one word;
2) $n$ is the number of words in the input string;
3) $x_j$ is a certain language;

With this method the following results were achieved:

|  | 1-2 words | 3-5 words | 6-10 words | 11-15 Words | 16-20 words | Above 20 words | Total |
|---|---|---|---|---|---|---|---|
| bi-gram technique | 76,92% | 95% | 90% | 100% | 95% | 100% | 95,58% |
| tri-gram technique | 69,23% | 95% | 85% | 75% | 95% | 100% | 89,38% |
| Short word technique | 38,46% | 90% | 100% | 100% | 95% | 100% | 91,15% |
| Short word+ trigram technique | 69,23% | 90% | 100% | 100% | 95% | 100% | 96,46% |
| Short word+ bi-gram technique | 79,92% | 95% | 100% | 100% | 95% | 100% | 97,35% |

They are also not bad, especially with the results using bi-gram technique; the total results are around 2% better than before. However, the results with the tri-gram technique have become much worse. After debugging the test string that gave a wrong result with the tri-gram technique, it was found that the greatness of one word occurrence probability may have a decisional influence on the final result, when the probability value of one language is greater than the others in several decimals. This phenomenon appears among all the techniques that have been used. However, the tri-grams in the corpora are much more than bi-grams or short words, about 7 to 8 times more. The probabilities in the tri-grams corpus are also much different, so if there is a word in the unknown string that a language has won with an absolutely greater probability, about 2 or 3 decimals greater for example, this greater value may still have a decisional influence after adding up all of the probabilities of each word and give out a wrong result. For instance, there is one text string in the group 11-15 words
"Andreas Herder <herder.luxembourg@freenet.de> schrieb:
>> Gibt es bei den Regenerativen vergleichbares ?"
This is obviously German. There is a token "de". The occurrence probabilities of both two tri-grams of it, "-de" and "de-", have in French a much bigger value than in German, the $w_i$ value of "de" is about one decimal greater, so only because of this word has the final result changed. Those are the same as in the test string group 16-20 words. There is a test string that contains three times "de", therefore all of the methods would have given wrong results. (This is perhaps not a good sample, because "de" appears in an e-mail address that should not be considered as plain text, but it is still a phenomenon that could happen.) This method is a little bit more sensitive than the other methods that have been used, although the total results are not much worse or sometimes even better than the other.

**Claims**

1. Method for identifying the language of a text string, in particularly for providing language information to a text-to-speech application, comprising the steps of:

   a) obtaining a string to be analysed
   b) dividing the string into separated words
   c) obtaining one word
   d) analysing the word with a short-word-list technique
   e) in addition analysing said word with a n-gram technique, if there are no results from the short-word-list technique
   f) performing the steps c) to e) for further words of the string
   g) determine the languages of the string based on the analysing results of both the short-word-list technique and n-gram technique.

2. Method according to claim 1, **characterised in that**, that the text string is part of a document and for certain documents to be analysed certain short-word-lists are used, which are generated based on similar kind of documents as the documents to be analysed

3. Method according to claim 1 or 2, **characterised in that**, that the analysing of the language of the text string is further performed by searching for special language characteristics.

4. Method according to one of the claims 1 to 3, **characterised in that**, the used n-gram technique is a bi-gram or tri-gram technique.

5. Method according to one of the claims 1 to 3 claim, **characterised in that**, the used short-word-technique is based on a word list of one to six letter words and their probability.

6. Method according to one of claims 1 to 5, **characterised in that**, step d) is only performed for words having less than or equal letters as the words of a used short word list.

7. Method according to one of the claims 1 to 6, **characterised by** step:

   - weighting the results by means of a geometric mean and adding the geometric means according the greatness of the results of each language

8. Language analyse module for analysing the language of a text string comprising means for carrying out the steps of:

   a) obtaining a string to be analysed
   b) dividing the string into separated words
   c) obtaining one word
   d) analysing the word with a short-word-list technique
   e) in addition analysing said word with a n-gram technique, if there are no results from the short-word-list technique
   f) performing the steps c) to e) for further words of the string
   g) determine the languages of the string based on the analysing results of both the short-word-list technique and n-gram technique.

9. Language analyse module according to claim 8, **characterised in that**, the module is a software program product comprising a program code adapted for running on a microprocessor and thereby performing said steps.

**10.** Language analyse module according to claim 8, **characterised in that**, the module is a hardware comprising at least a microprocessor, a memory, an input/output interface and a program code adapted for running on the microprocessor and thereby performing a said steps.

Figure 1

Obtain one word

Divide the word into
n-grams

Calculate the probability of
the word occurrence for the
languages

Give an integer value to
each language according to
their probability greatness

Determining the language of
the word

Figure 2

**European Patent Office**

**EUROPEAN SEARCH REPORT**

Application Number

EP 04 29 1673

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 014 276 A (XEROX CORPORATION) 28 June 2000 (2000-06-28) * the whole document * ----- | 1-10 | G06F17/27 G06F17/28 |
| A | GREGORY GREFENSTETTE: "Comparing two language identification schemes" JADT 1995, 3RD INTERNATIONAL CONFERENCE ON STATISTICAL ANALYSIS OF TEXTUAL DATA, [Online] 11 December 1995 (1995-12-11), XP002315053 ROME, ITALY Retrieved from the Internet: URL:http://www.xrce.xerox.com/Publications /Attachments/1995-012/Gref---Comparing-two -language-identification-schemes.pdf> [retrieved on 2005-01-25] * the whole document * ----- | 1-10 | |
| A | TED DUNNING: "Statistical identification of language" TECHINICAL REPORT. CRL TECHNICAL MEMO MCCS-94-273, [Online] 10 March 1994 (1994-03-10), XP002315054 UNIVERSITY OF NEW MEXICO, USA Retrieved from the Internet: URL:http://citeseer.ist.psu.edu/dunning94s tatistical.html> [retrieved on 2005-01-25] * page 1, line 1 - page 6, line 11 * ----- | 1-10 | TECHNICAL FIELDS SEARCHED (Int.Cl.7) G06F |

The present search report has been drawn up for all claims

| Place of search | Date of completion of the search | Examiner |
|---|---|---|
| Berlin | 28 January 2005 | Woods, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 29 1673

This annex lists the patent family members relating to the patent documents cited in  the above-mentioned European search report.
The members are as contained in the European Patent Office EDP file on
The European Patent Office is in no way liable for these particulars which are merely  given for the purpose of information.

28-01-2005

| Patent document cited in search report | | Publication date | Patent family member(s) | | Publication date |
|---|---|---|---|---|---|
| EP 1014276 | A | 28-06-2000 | US | 6167369 A | 26-12-2000 |
| | | | BR | 9905978 A | 05-09-2000 |
| | | | EP | 1014276 A2 | 28-06-2000 |
| | | | JP | 2000194696 A | 14-07-2000 |

EPO FORM P0459

For more details about this annex : see Official Journal of the European Patent Office, No. 12/82